# EUROPÄISCHE PATENTSCHRIFT

(11) **EP 0 604 510 B1**
(45) Veröffentlichungstag und Bekanntmachung des Hinweises auf die Patenterteilung: **01.05.1996**
(21) Anmeldenummer: 92919609.5
(22) Anmeldetag: 07.09.1992
(51) Int. Cl.: G11B 15/473, G11B 15/467

(54) **RECORDER MIT ANTRIEBS-PHASENDETEKTOR**
RECORDER WITH DRIVE PHASE DETECTOR
ENREGISTREUR AVEC DETECTEUR DE PHASE D'ENTRAINEMENT

(30) Priorität: 20.09.1991 DE 4131278
(43) Veröffentlichungstag der Anmeldung: 06.07.1994
(73) Patentinhaber: DEUTSCHE THOMSON-BRANDT GMBH, D-78048 Villingen-Schwenningen (DE)
(72) Erfinder: SCHANDL, Hartmut, A-1110 Wien (AT)
(86) Internationale Anmeldenummer: EP9202059
(87) Internationale Veröffentlichungsnummer: WO9306598

(56) Entgegenhaltungen:
- EP-A- 0 209 813
- DE-A- 3 920 164
- PATENT ABSTRACTS OF JAPAN, unexamined applications, P Sektion, Band 13, Nr. 316, 18. Juli 1989 THE PATENT OFFICE JAPANESE GOVERNMENT

## Beschreibung

Die Erfindung betrifft einen Recorder nach dem Oberbegriff des Anspruchs 1.

Bei handelsüblichen Recordern mit am Umfang einer rotierenden Kopftrommel angeordneten Schreib/Lese-Köpfen, im folgenden Köpfe genannt, zur Aufzeichnung und/oder Wiedergabe von Signalen nach dem Schrägspurverfahren, wie z.B. bei Videorecordern, ist es bekannt, für Kopftrommelantrieb und Antrieb eines bandförmigen die Kopftrommel umschlingenden Aufzeichnungsmediums, elektronisch kommutierbare Motore einzusetzen. Bei dem das Aufzeichnungsmedium antreibenden Motor ist die Motorwelle als Capstan ausgebildet. Der andere Motor bildet zusammen mit der Kopftrommel eine mechanische Einheit, wobei dessen Motorwelle eine phasenstarre Verbindung zwischen dem Motorrotor und dem die Köpfe tragenden Kopfrad herstellt. Beide Motoren sind jeweils Teil von Drehgeschwindigkeits- und/oder Phasenregelkreisen, die beide Antriebe mit Hilfe eines Referenzsignals miteinander verknüpfen und gemäß der jeweiligen Recordernorm optimale Bezugslagebedingungen für die Köpfe, aufzusprechende Signale und/oder abzutastende Signalspuren herstellen.

Wesentliche Referenzsignale sind bei einem Videorecorder die Bildwechselimpulse, auf die alle weiteren im Recorder erzeugten Hilfssynchronsignale abgestimmt werden.

In der VHS-Norm ist z.B. festgelegt, daß das Aufzeichnungsmedium eine Kopftrommel mit einem ersten und einem zweiten Schreib/Lese-Kopf mit etwas mehr als 180° umschlingt. Von jedem im Eingriff mit dem Aufzeichnungsmedium stehenden Schreib/Lese-Kopf wird in einer Spur ein Halbbild in einem Umschlingungsbereich von 180° aufgezeichnet oder abgetastet, wobei dem ersten Kopf jeweils die ersten Halbbilder und dem zweiten Kopf jeweils die zweiten Halbbilder zugeordnet sind. Beide Kopfspalte weisen jeweils spiegelbildlich zur Kopfmittelachse einen Azimutwinkel von etwa 6° auf. Der über 180° hinausgehende Umschlingungsbereich von etwa 7° ist für nachfolgende Zeilen des nächsten Halbbildes vorgesehen, so daß sich eine Überlappungszone zweier nebeneinander liegender Spuren ergibt. Die Lage dieser Überlappungszone ist in ihrer mittleren Zuordnung auf 6,5 ± 1,5 Zeilen vor Eintreffen eines Vertikal-Synchronimpulses festgelegt. Sie ist auch die Schaltposition für die Umschaltung der Köpfe bei Wiedergabe.

Es ist weiterhin bekannt, daß im Aufnahmebetrieb der Kopftrommelantrieb phasengeregelt wird, während der Capstanantrieb drehzahlgeregelt wird. Im Wiedergabebetrieb ist es umgekehrt. Es ist üblich, für derartige Regelungen sowie für betriebsartbedingte Steuerungen beider Antriebe Mikroprozessoren zu verwenden. Zur jeweiligen Detektion der Pasenlage zum Zwecke der Gewinnung von Führungsgröße und Regelgrößen für die Phasenregelung des einen oder des anderen Antriebes, ist in Nähe der Kopftrommel wenigstens ein Lagegebersensor angeordnet. Die Führungsgröße für die Phasenregelung beider Antriebe wird bekannterweise mit Hilfe eines Referenzbandes gewonnen und im Recorder abgespeichert, so daß auch dessen Kompatibilität mit systemgleichen Recordern und fremdbespielten Bändern hergestellt ist. Die Führungsgröße kann dabei auch, wie beispielhaft in der P 35 28 452.8 beschrieben, in einem für die Antriebsregelungen und -steuerungen verwendeten Mikroprozessor abgespeichert werden.

Zur Drehgeschwindigkeitsregelung elektronisch kommutierbarer Motore für den Antrieb derartiger Kopftrommeln sind aus der von PHILIPS 1990 herausgegebenen TECHNICAL PUBLICATION integrierte Motorschaltkreise (Typenbezeichnung: TDA 514x) bekannt. Die zur Drehgeschwindigkeitsregelung erforderliche Regelgröße wird aus Tachosignalen abgeleitet, die aus der Kommutierung durch Detektion und Auswertung der Nulldurchgänge der induzierten Gegenspannungen beim Abschalten der Wicklungsstränge gewonnen werden. Darüberhinaus werden dem Auswertergebnis entsprechend in diesen Motorschaltkreisen Steuersignale für im Schaltbetrieb arbeitende Endverstärkerstufen dieser Motorschaltkreise erzeugt, an denen die Wicklungsstränge angeschlossen sind. Die Genauigkeit des Motorantriebes wird jedoch von den Fertigungstoleranzen der Wicklungsstränge und des Rotors bestimmt. Für hochpräzise Motorantriebe von Aufnahme- und Wiedergabegeräten wird deshalb zusätzlich eine von Markierungen der rotierenden Teile abgeleitete Phasenregelung verwendet.

Als Lagegebersensoren werden heute üblicherweise mit dem Rotor des Kopftrommelmotors verkoppelte Gabellichtschranken oder Hallelemente oder induktive Magnetsensoren verwendet. Solche Lagegeber sind relativ teuer, und außerdem erfordert deren Anordnung manuelle Tätigkeiten.

Es ist Aufgabe der Erfindung, bei einer Schaltungsanordnung zur Phasenregelung von Kopftrommel- und/oder Bandantrieb mit einem solchen Motorschaltkreis den Aufwand zur Phasendetektion der rotierenden Köpfe zu verringern.

Diese Aufgabe wird durch die im Anspruch 1 angegebene Erfindung gelöst. Vorteilhafte Weiterbildungen sind in den Unteransprüchen angegeben.

Der Erfindung liegt die Idee zugrunde, mit Hilfe der Kommutierungszyklen der elektronisch kommutierbaren, feststehenden Wicklungsstränge des Kopftrommelmotors zwischen den rotierenden Köpfen, aufzusprechenden Signalen, abzutastenden Signalspuren und einem Referenzsignal, wie z.B. dem Bildwechselimpuls bei einem Videorecorder, einen Bezug herzustellen, aus dem sich Führungs- und Regelgröße für eine Phasenregelung von Kopftrommel- und/oder Capstanantrieb ableiten lassen, um die eingangs erwähnten normgemäßen Bezugslagebedingungen für die rotierende Köpfe, aufzusprechenden Signale bzw. abzutastenden Signalspuren herzustellen.

Anstelle von einem separaten Lagegebersensor wird im Prinzip einer der Wicklungstränge des Kopftrommelmotors zur Phasendetektion des Kopftrommelantriebes verwendet. Dabei wird aus der Kommutierung des Wicklungsstranges ein Signal abgeleitet, im folgenden Kommutierungssignal genannt, das in eine Beziehung zu dem Referenzsignal gesetzt wird, um daraus die Führungsgröße zur Phasenregelung von Kopftrommel- und/oder Capstanantrieb zu gewinnen. Dazu wird die Differenz zwischen der aktuellen Rotorstellung und einer Null-Phasenlage gemessen, die der Rotor zum Referenzsignal einnehmen soll. Dadurch wird eine eindeutige Phasenbestimmung gewährleistet, die sowohl die aktuelle Rotorstellung als auch die Toleranzen des mechanischen Systems des Motors berücksichtigt. Dadurch kann das von mindestens einem Wicklungsstrang detektierte Kommutierungssignal in vorteilhafter Weise auch zur Phasenregelung von Präzisionsantrieben mit einem Motorschaltkreis von der Art der erwähnten TDA 514x verwendet werden.

Bei der Erfindung werden folgende Tatsachen und Erkenntnisse ausgenutzt. Eine Kommutierung erfolgt immer nur dort, wo der Rotor bzw. dessen Feldmagnete eine für die Drehmomentbildung günstige Stellung mit den Wicklungssträngen aufweist. Die Anzahl der Kommutierungen pro Wicklungsstrang und Rotorumdrehung und damit die auf eine Rotorumdrehung und einen Wicklungsstrang bezogene Häufigkeit eines solchen Kommutierungssignals hängt jedoch davon ab, wieviele Pole ein Wicklungstrang aufweist bzw. wieviele einzelne Spulen, im folgenden Statorspulen genannt, jeweils zu einem Wicklungsstrang zusammengeschaltet sind. Das bedeutet, daß dem von einem Wicklungsstrang abgeleiteten Kommutierungssignal bestimmte Phasenlagen des Rotors und damit mehrere Phasenlagen der mit dem Rotor phasenstarr verkoppelten Köpfen zugeordnet sind.

Mit der Häufigkeit des Auftretens eines solchen Kommutierungssignals pro Rotorumdrehung stellt sich das Problem, mit Hilfe eines solchen Kommutierungssignals die rotierenden Köpfe, die aufzusprechenden Signale bzw. die abzutastenden Signalspuren gemäß der Recordernorm einander zuzuordnen.

Das Problem wird durch eine für den Recorder vorgesehene Intialisierung gelöst, die jeweils zu Beginn eines jeden Aufnahme- und Wiedergabebetriebes durchgeführt wird. Hierbei wird aus den Kommutierungs- und Referenzsignalen jeweils die Führungsgröße für das durch die Recordernorm vorgegebene Zusammenwirken beider Antriebe mit den aufzusprechenden Signalen bzw. abzutastenden Signalspuren bestimmt.

Bei der Initialisierung für den Aufnahmebetrieb wird erfindungsgemäß bei stehendem Aufzeichnungsmedium zunächst einem der rotierenden Köpfe während eines Kopftrommel-Drehwinkelbetrages ein moduliertes sogenanntes Initialisierungssignal zugeführt, dessen dabei auf dem Aufzeichnungsmedium hinterlassene Signalspur anschließend gelesen wird. Die Länge dieser Signalspur hängt davon ab, welche der mit dem Kommutierungssignal detektierbaren Rotorstellungen zu Aufzeichnungsbeginn die Null-Phase in Bezug zum Referenzsignal bildete. Die Länge der Signalspur sowie deren phasenmäßige Lage in Bezug zu dem Referenzsignal lassen sich z.B. mit einem Mikroprozessor auswerten, um daraus sowohl, durch eine entsprechende Phasenregelung des Kopftrommelantriebes, die normgemäße Kopf/Signal-Zuordnung herzustellen als auch die Führungsgröße für das Zusammenwirken beider Antriebe mit den aufzusprechenden Signalen zu bestimmen. Um zu verhindern, daß bei der Abtastung ein der Initialisierungssignalspur zufällig nachfolgender Spurrest, z.B. von einer Fremdaufnahme, zu einer Fehlinterpretation führt, wird die Lesedauer zeitlich begrenzt.

Dadurch, daß Initialisierungssignal-Zuführungs- und Lesedauer dem Bandumschlingungswinkel der Kopftrommel angepaßt werden können, ist die Erfindung für unterschiedliche Bandumschlingungswinkel anwendbar.

Die Differenz zwischen der aktuellen Rotorstellung und der Null-Phase wird beim Aufnahmebetrieb jeweils nur einmal zu Beginn festgestellt und kann dann als konstante Führungsgröße über die gesamte Aufnahmedauer verwendet werden.

Zur Initialisierung für den Wiedergabebetrieb des Recorders wird die vorhandene Aufnahme verwendet, da aus deren Signalspuren die Kopf/Signal-Zuordnung und die führungsgröße gewinnbar sind. Ermittlung der Kopf/Signalspur-Zuordnung und Bestimmung der Führungsgröße erfolgen hierbei durch Detektion einer vollständigen Signalspur mit einem der rotierenden Köpfe. Zur Erfassung bzw. Detektion einer vollständigen Signal spur wird das Band während der Initialisierung mit einer von der normalen Wiedergabegeschwindigkeit abweichenden Geschwindigkeit angetrieben.

Die Erfindung wird im folgenden in Ausführungsbeispielen anhand der Zeichnungen erläutert. Darin zeigen:
- Fig. 1: schematisch eine Kopftrommel eines handelsübli chen Videorecorders mit einem elektronisch kommutierbaren Motor zum Antrieb der Kopftrommel,
- Fig. 2: ein Ablaufdiagramm für die Kommutierungsfolge eines Wicklungsstranges des Kopftrommelmotors gemäß Fig. 1,
- Fig. 3: eine Schaltunganordnung zur Regelung von Kopf trommel- und Bandantrieb in einer Ausführungsart der Erfindung,
- Fig. 4: Ablaufdiagramme von detektierbaren Rotorstellungen für die Ermittlung der Phasenlage der Schreib/Leseköpfe in der Schaltungsanordnung gemäß Fig. 3,

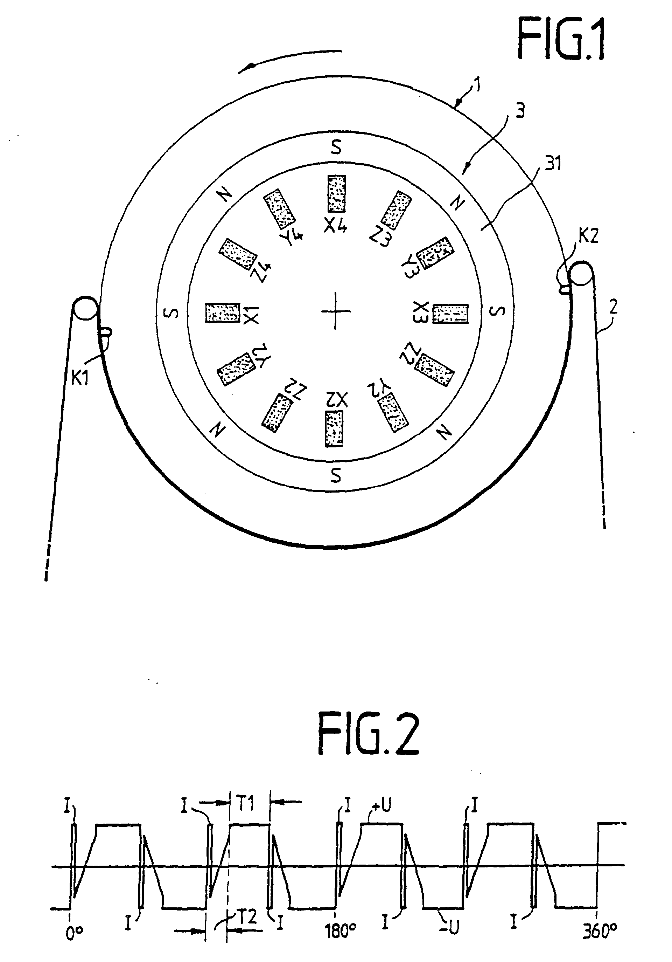

Fig. 1 zeigt schematisch eine rotierende Kopftrommel 1 mit zwei sich gegenüberliegenden Schreib/Lese-Köpfen K1, K2 zum Abtasten oder Aufsprechen von Signalen in rasenlosen Schrägspuren eines bandförmigen Aufzeichnungsmediums 2, im folgenden Band genannt, das die Kopftrommel 1 mit etwas mehr als 180° umschlingt. Der Antrieb der Kopftrommel 1 bzw. des die Köpfe K1, K2 tragenden Kopfrades erfolgt dabei durch einen Motor 3, der mit der Kopftrommel 1 eine mechanische Einheit bildet und vorzugsweise aus einem zwölfpoligen Stator und einem achtpoligen Rotor 31 besteht. Die Drehrichtung des mit dem Rotor 31 verbundenen Kopfrades ist durch einen Pfeil gekennzeichnet.

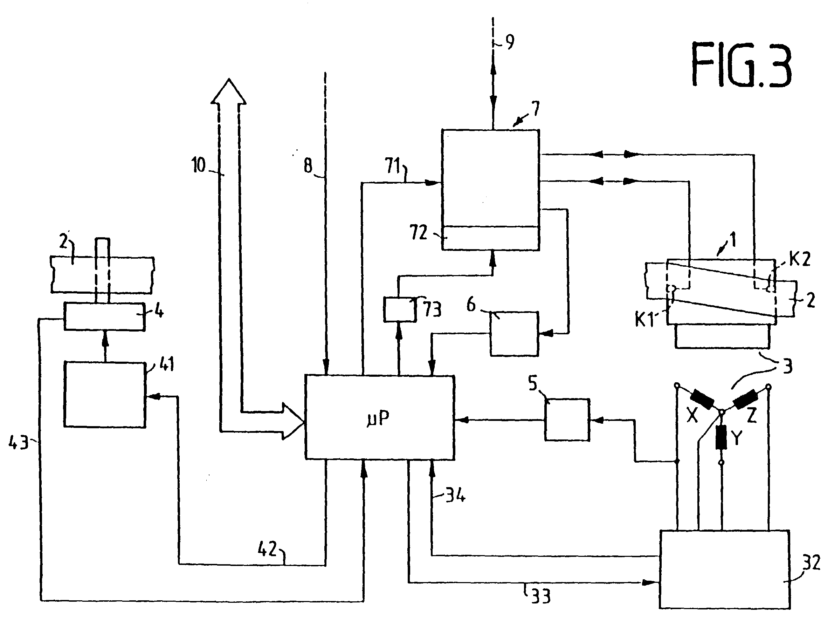

Den Rotor 31 bilden im wesentlichen acht Feldmagnete, die um zwölf ringförmig angeordnete Statcrspulen X1 - X4, Y1 - Y4, Z1 - Z4 rotieren, wobei jeweils 4 Statorspulen X1 - X4; Y1 - Y4; Z1 - Z4 einen elektronisch kommutierbaren Wicklungsstrang X; Y; Z (Fig. 3) bilden. Die Wicklungsstränge X, Y, Z sind vorzugsweise in Sternschaltung geschaltet. Die Statorspulen X1 - X4, Y1 - Y4, Z1 - Z2 und die magnetischen Pole Nord N und Süd S des Rotors sind jeweils gleichmäßig verteilt angeordnet. Die jeweilige Anordnungsgenauigkeit wird jedoch von Fertigungstoleranzen bestimmt.

Mit dem in die Bandumschlingung eingetauchten Kopf K1 ist die Rotorstellung angedeutet, bei der im Wiedergabebetrieb die erwähnte Kopfumschaltung erfolgt.

Zur Gewinnung von Führungs- und Regelgröße zur Phasenregelung von Kopftrommel- und/oder Bandantrieb sowie einer Regelgröße zur Herstellung der normgemäßen Kopf/Signal- bzw. der Kopf/Signalspur-Zuordnung bei den erwähnten Initialisierungen der Schaltungsanordnung für die Regelungen von Kopftrommel- und Bandantrieb wird erfindungsgemäß einer der Wicklungsstränge verwendet, zum Beispiel, wie in Fig. 3 mit dem Kopftommelmotor 3 gezeigt, der Wicklungsstrang X. Als Lagegebersignal wird ein impulsförmiges Kommutierungssignal I verwendet, das, wie aus dem in Fig. 2 gezeigten Spannungsverlauf an dem Wicklungsstrang X für eine Rotorumdrehung ersichtlich, bei bestimmten Rotorstellungen auftritt. In Fig. 2 ist die Kommutierungsfolge des Wicklungsstranges X für eine Rotorumdrehung dargestellt. Der Spannungsverlauf ist durch die Kombination des Motors 3 mit einer Motorsteuerschaltung 31 von der Art der erwähnten Motorschaltkreise TDA 514x vorgegeben. Erkennbar sind die jeweiligen Einschaltperioden T1 und Ausschaltperioden T2 des Wicklungsstranges X. Die Form des abwechselnd zur Bezugslinie mit positiver und negativer Polarität sich wiederholenden Kommutierungssignals I wird durch in die Motorschaltung 31 integrierte Rückstrom-Dioden bewirkt, indem diese Dioden jeweils von der Gegen-EMK durchgeschaltet werden, die bei den kommutierungsbedingten Abschaltungen des Wicklungstranges X durch Induktion in dem Wicklungsstrang X erzeugt wird. Jedem der Wicklungsstränge X, Y, Z sind jeweils zwei solcher Rückstrom-Dioden zugeordnet. Zur Ermittlung der Rotorstellung für die normgemäße Kopf/Signal- bzw. Kopf/Signalspur-Zuordnung werden vorzugsweise nur die Kommutierungssignale I einer Polarität verwendet. Derartige Kommutierungssignale I werden in jedem der Wicklungsstränge X, Y, Z erzeugt.

Mit dem Betrag der Spannung +U bzw. -U, mit der die Wicklungsstränge X, Y, Z während ihrer Einschaltperioden T1 beaufschlagt werden, wird die Stellgröße für die jeweilige Antriebsregelung der Kopftrommel 1 bestimmt.

Fig. 3 zeigt das Prinzip einer Schaltungsanordnung zur Regelung von Kopftrommel- und Bandantrieb, wobei in der weiteren Beschreibung die Anordnung gemäß Fig. 1 sowie das Diagramm gemäß Fig. 2 zugrunde gelegt werden.

Fig. 3 zeigt ein Blockschaltbild einer Schaltungsanordnung zur Regelung von Kopftrommel und Bandantrieb mit dem zur Phasendetektion der Köpfe K1, K2 genutzten Wicklungsstrang X. Die Schaltungsanordnung weist im wesentlichen folgende elektronische Schaltungen auf: eine Motorsteuerschaltung 41 für einen Captstanmotor 4 zum Antrieb des Bandes 2, einen als Motorsteuerschaltung 32 für den Kopftrommelmotor 3 verwendeten Motorschaltkreis von der Art der TDA 514x, einen mit dem Wicklungsstrang X verbundenen Impulsdetektor 5 zur Detektion der Kommutierungssignale I des Wicklungsstranges X, eine mit dem Kopf K1 verbindbare Detektorschaltung 6 zur Initialisierungssignal-Detektion und einen Mikroprozessor µP sowie eine Schalteinheit 7, die einen vom Mikroprozessor µP über ein Flip-Flop 73 steuerbaren Kopf-Umschalter 72 sowie vom Mikroprozessor µP über eine mehradrig Leitung 71 gesteuerte Schalter für betriebsart- und initialisierungsbedingte Signalwegumschaltungen enthält. Mit einer Leitung 9 sind Verbindungen der Schalteinheit 7 mit den nicht dargestellten Aufnahme- und Wiedergabesignale verarbeitenden Schaltungen des Recorders angedeutet. Der Mikroprozessor µP ist über einen Datenbus 10 mit der nicht dargestellten Bedienungseinrichtung des Recorders verbunden. Über den Datenbus 10 erhält der Mikroprozessor µP Anweisungen und meldet deren Ausführung wie z.B., daß die Initialisierung der Schaltungsanordnung abgeschlossen ist.

Die Schaltungsanordnung wird im folgenden anhand der Initialisierungen für den Aufnahme- und Wiedergabebetrieb beschrieben. Die verschiedenen dabei beschriebenen Regelungen und Steuerungen von Kopftrommel- und Bandantrieb erfolgen durch den Mikroprozessor µP durch entsprechende Steuerungen der Motorsteuerschaltungen 32; 41 über Leitungen 33; 42.

### Aufnahmebetrieb

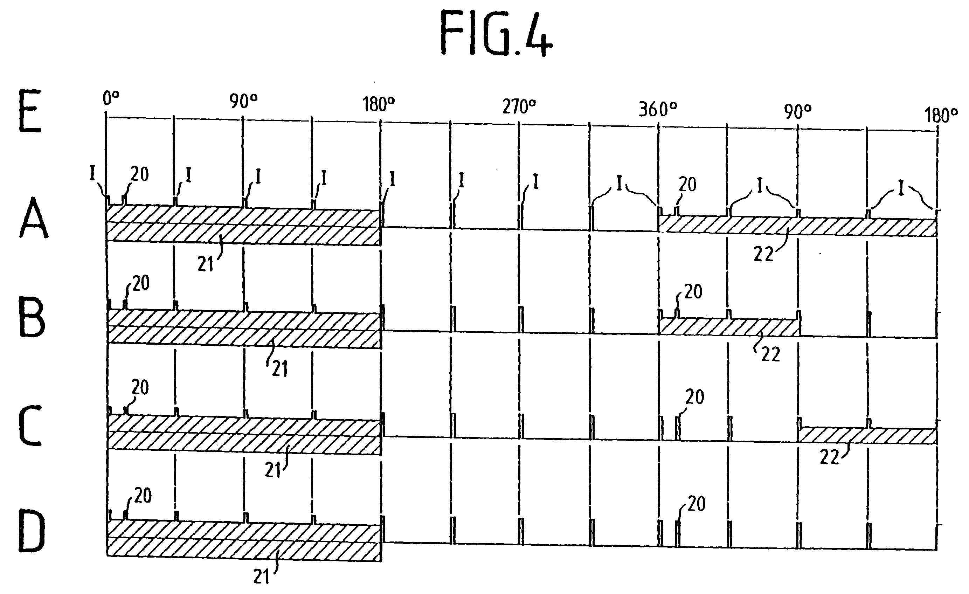

Bei stehendem Band 2 und auf Solldrehgeschwindigkeit geregeltem Kopftrommelmotor 3 wird vom Mikroprozessor µP einem beliebigen Kommutierungssignal I positiver Polarität, das mit dem Impulsdetektor 5 detektiert und vom Ausgang des Impulsdetektors 5 dem Mikroprozessor µP zugeführt wird, eine Null-Phase zu einem Referenzsignal 20 (Fig. 4) des aufzunehmenden Videosignals zugeordnet. Die Regelgröße für die Drehgeschwindigkeitsregelung des Motors 3 leitet der Mikroprozessor µP dabei von Tachosignalen ab, die ihm über eine Verbindung 34 zugeführt werden und die in der eingangs erwähnten Weise mit der Motorsteuerschaltung 32 gewonnen werden. Als Referenzsignal 20, das dem Mikroprozessor µP über eine Leitung 8 zugeführt wird, wird der Bildwechselimpuls des Videosignals verwendet. Die Null-Phase ist eine Führungsgröße und besteht in einem anordnungsbedingt vorgegebenen Zeit- und/oder Phasen-Unterschied zwischen der Vorderflanke des Kommutierungssignals I und der Vorderflanke des Referenzsignals 20. Die Führungsgröße ist in dem Mikroprozessor µP gespeichert.

Für die Dauer einer halben Kopftrommelumdrehung wird anschließend über die Schalteinheit 7 nur dem Kopf K1 ein Initialisierungssignal 21 (Fig. 4) zugeführt. Als Initialisierungssignal 21 wird das Videosignal bzw. dessen frequenzumgesetztes Aufsprechsignal verwendet. Nach einer weiteren halben Kopftrommelumdrehung, bei deren Beginn mittels der Schalteinheit 7 die Initialisierungssignal-Zuführung unterbrochen und bei deren Ende mittels der Schalteinheit 7 derselbe Kopf K1 mit dem Eingang der Detektorschaltung 6 verbunden wird, wird die mit dem Initialisierungssignal 21 aufgezeichnete Signalspur mit demselben Kopf K1 abgetastet. Das dabei mit der Detektorschaltung 6 detektierte Signal 22 (Fig. 4) wird dem Mikroprozessor µP zur Auswertung zugeführt. Die Dauer der Verbindung der Detektorschaltung 6 mit dem Kopf K1 beträgt dabei ebenfalls eine halbe Kopftrommelumdrehung bzw. Rotorumdrehung, wobei die Verbindung ebenfalls mittels der Schalteinheit 7 unterbrochen wird.

Die Länge des detektierten Signals 22 bzw. die Signalspurlänge und dessen phasenmäßige Lage zum Referenzsignal 20 sind ein Maß dafür, welcher Rotorstellung der Mikroprozessor µP die Null-Phase zum Referenzsignal 20 zugeordnet hatte.

Der Zusammenhang zwischen Rotorstellung, Länge und Lage des Signals 22 ist anhand der Diagramme A - D ist in Fig. 4 dargestellt. Diagramm A zeigt die Null-Phasenzuordnung eines solchen Kommutierungssignals I zum Referenzsignal 20 bei richtiger Rotorstellung. Diagramm B zeigt die Null-Phasenzuordnung bei einer Rotorstellung von 90° voreilend. Diagramm C zeigt die Null-Phasenzuordnung bei einer Rotorstellung von 90° nacheilend. Diagramm D zeigt die Null-Phasenzuordnung bei einer Rotorstellung von 180°, bei der kein Signal 21 aufgezeichnet und demzufolge abgetastet werden kann. Der Maßstab E entspricht eineinhalb Rotorumdrehungen.

Der Mikroprozessor µP wertet die Länge des detektierten Signals 22 und dessen phasenmäßige Lage zum Referenzsignal 20 aus und ordnet bei einem dem Diagramm B, C oder D entsprechenden Auswertergebnis einem entsprechenden Kommutierungssignal I die Nullphase zum Referenzsignal 20 zu. Dabei wird durch eine Phasenregelung des Kopftrommelantriebes die richtige Rotorstellung für den Aufnahmebetrieb hergestellt. Gleichzeitig werden der Bandantrieb eingeschaltet und durch entsprechende Ansteuerung der Schalteinheit 7 die Signalwege in der Schalteinheit 7 für den normalen Aufnahmebetrieb hergestellt und mit der Aufzeichnung begonnen. Das Band 2 wird dabei mit einer konstanten Geschwindigkeit angetrieben. Die Regelgröße für den Bandantrieb gewinnt der Mikroprozessor µP aus Tachosignalen des Capstanmotors 4. Die Tachosignale werden dem Mikroprozessor µP über eine Leitung 43 zugeführt.

### Wiedergabebetrieb

Bei der Initialisierung für den Wiedergabebetrieb wird das bespielte Band 2 mit einer von der normalen Wiedergabetriebsgeschwindigkeit abeichenden Geschwindigkeit angetrieben, z.B. 0.8 bis 0,9-fache Normalgeschwindigkeit, so daß im ungünstigsten Falle der Kopf K1 im Laufe weniger Rotorumdrehungen eine ihm zugeordnete Signalspur vollständig erfassen kann, was mit Hilfe der Detektorschaltung 6 vom Mikroprozessor µP erkannt wird. Der Eingang der Detektorschaltung 6 ist hierbei über die Schalteinheit 7 mit dem Kopf K1 ständig verbunden. Da die Signalspur nur bei entsprechender Kopf/Signalspur-Zuordnung und damit nur bei richtiger Rotorstellung vollständig detektiert werden kann, wird, sobald die Signalspur vollständig detektiert ist, unter Berücksichtigung der abweichenden Bandantriebsgeschwindigkeit dem entsprechenden Kommutierungssignal I die Null-Phase zum Referenzsignal 20 des bespielten Bandes 2 zugeordnet und auf Spielbetrieb umgeschaltet. Mit diesem Kommutierungssignal I werden auch Umschaltfolge und Umschaltzeitpunkt für die halbweise Umschaltung der Köpfe K1, K2 bestimmt und durch entsprechende Ansteuerung der Schalteinheit 7 die Signalwege in der Schalteinheit 7 für den Wiedergabetrieb hergestellt. Die dabei für den Wiedergabebetrieb erforderlichen Schaltsignale für den Kopfumschalter 72 werden mit Hilfe des vom Mikroprozessor µP gesteuerten Flip-Flops 73 generiert. Ihre Zuordnung zu diesem Kommutierungssignal I wird durch im Mikroprozessor µP gespeicherte Verzögerungszeiten bestimmt, die sich bei Abgleich des Recorders z.B. mit Hilfe eines Bandes 2 ergeben, welches nach Norm aufgezeichnete Signale enthält. Das Flip-Flop 73 kann im Mikroprozessor µP integriert sein.

Als Detektorschaltung 6 wird der bereits im Recorder vorhandene Hüllkurvendetektor für Sonderbetriebsarten, wie z.B. Standbild, genutzt.

Der Impulsdetektor 5 kann in der Motorsteuerschaltung 32 integriert sein.

Der Kopf 1 und der die jeweiligen Kommutierungssignale (I) bereitstellende Wicklungstrang X bilden somit einen Lagegebersensor, mit dem entsprechende Phasenlagen der Köpfe K1, K2 detektierbar sind.

Wie bereits erwähnt, ist die Erfindung keineswegs nur auf Recorder beschränkt, bei denen der Bandumschlingungswinkel des Aufzeichnungsmediums 180° beträgt. Bei Recordern mit anderen Umschlingungswinkeln, z.B. 270°, ist entsprechend zu verfahren.

Die Erfindung ist insbesondere für Videorecorder und Camcorder geeignet.

Die Erfindung bezieht sich nicht nur auf Motoren, deren Wicklungsstränge eine Sternschaltung bilden.

## Patentansprüche

1. Recorder mit einer rotierenden Kopftrommel (1) zur Aufnahme und/oder Wiedergabe von Signalen in den Schrägspuren eines von einem Capstanmotor (4) antreibbaren bandförmigen Aufzeichnungsmediums (2) nach dem Helical-Scan-Verfahren, mit einem die Kopftrommel (1) direkt antreibenden Motor (3), dessen Wicklungsstränge (X, Y, Z) elektronisch kommutiert werden, und mit einer Schaltungsanordnung zur Phasenregelung von Kopftrommel- und/oder Bandantrieb mit einer mit den Wicklungssträngen (X, Y, Z) verbundenen Motorsteuerschaltung (32), mittels welcher Steuersignale für die Kommutierung der Wicklungsstränge (X, Y, Z) erzeugt werden, die von Kommutierungssignalen (I) abgeleitet werden, die jeweils bei den kommutierungsbedingten Wicklungsstrangumschaltungen für die Motordrehmomenterzeugung in den jeweiligen dabei abgeschalteten Wicklungssträngen (X, Y, Z) durch Induktion hervorgerufen werden, **dadurch gekennzeichnet**, daß zur Phasendetektion der am Umfang der rotierenden Kopftrommel (1) angeordneten Schreib/Lese-Köpfe (K1, K2) zwecks Gewinnung von Führungs- und Regelgröße zur Phasenregelung von Kopftrommel- und/oder Bandantrieb ein Lagegebersensor vorgesehen ist, der aus einem mindestens ein Kommutierungsignal (I) bereitstellenden Wicklungsstrang (X, Y, Z) und einem der Schreib/Lese-Köpfe (K1, K2) gebildet wird, indem bei einer Initialisierung der Schaltungsanordnung, die jeweils zu Beginn eines jeden Aufnahme- oder Wiedergabebetriebes durchgeführt wird, mit einem Mikroprozessor (µP) und einem von einem der Schreib/Lese-Köpfe (K1, K2) während der jeweiligen Initialisierung detektierten Signal ein Kommutierungssignal (I) ermittelt wird, dem eine Null-Phase zum Referenzsignal (20) des aufzuzeichnenden oder wiedergegebenen Signals zugeordnet wird, und daß zum Gewinnen der Führungs- und Regelgröße für die Phasenregelung von Kopftrommel- und/oder Bandantrieb aus dem Kommutierungssignal (I) der Mikroprozessor (µP) vorgesehen ist.

2. Recorder nach Anspruch 1, **dadurch gekennzeichnet**, daß die Schaltungsanordnung mindestens eine Phasenregeleinrichtung aufweist, die aus einem mindestens ein Kommutierungsignal (I) bereitstellenden Wicklungsstrang (X, Y, Z) und einer mit diesem Wicklungsstrang verbundenen Regelstrecke besteht.

3. Recorder nach Anspruch 1, **dadurch gekennzeichnet**, daß das von einem der Schreib/Lese-Köpfe (K1, K2) bei der Initialisierung für den Aufnahmebetrieb detektierte Signal ein auf dem Aufzeichnungsmedium (2) gespeichertes Signal (22) ist, das mit einem Initialisierungssignal (21) gewonnen wird, das bei stillstehendem Aufzeichnungsmedium (2) einem der Schreib/Lese-Köpfe (K1, K2) für eine vorgegebene Dauer bzw. vorgegebenen Kopftrommel-Drehwinkelbetrag zugeführt wird und dessen dabei hinterlassene Signalspur anschließend von demselben Schreib/Lese-Kopf gelesen und vom Mikroprozessor µP zur Ermittlung der Phasenlage der Schreib/Lese-Köpfe (K1, K2) ausgewertet wird, wobei die Länge der jeweiligen hinterlassenen Signal spur in Verbindung mit deren phasenmäßiger Lage zum Referenzsignal (20) jeweils ein Maß für die Phasenlage der Schreib/Lese-Köpfe (K1, K2) ist.

4. Recorder nach Anspruch 3, **dadurch gekennzeichnet**, daß der Kopftrommel-Drehwinkelbetrag für die Dauer der Zuführung des Initialisierungssignals (21) entsprechend dem Bandumschlingungswinkel der Kopftrommel (1) oder entsprechend der normgemäßen Spurlänge vorgesehen ist.

5. Recorder nach Anspruch 3 oder 4, **dadurch gekennzeichnet**, daß ein in der Frequenzlage entsprechend umgesetztes Aufsprechsignal des Aufnahmesignals als Initialisierungssignal (21) vorgesehen ist.

6. Recorder nach Anspruch 1, **dadurch gekennzeichnet**, daß die Ermittlung des Kommutierungssignals (I) bei der Initialisierung des Wiedergabebetriebes durch Detektion der vollständigen Spurlänge einer Signalspur der vorhandenen Aufnahme erfolgt, und daß, zwecks Erfassung einer Signalspur mit einem der Schreib/Lese-Köpfe (K1, K2), die Antriebsgeschwindigkeit des Aufzeichnungsmediums (2) während der Initialisierung von der normalen Wiedergabegeschwindigkeit abweicht.

## Claims

1. Recorder including a rotating head drum (1) for the recording and/or reproduction of signals in the helical tracks of a tape-like recording medium (2) that is drivable by a capstan motor (4) in accordance with the helical scan process, including a motor (3) which directly drives the head drum (1) and whose winding phases (X, Y, Z) are commutated electronically, and including a circuit arrangement for regulating the phase of the drive mechanism for the head drum and/or the tape using a motor control circuit (32) which is connected to the winding phases (X, Y, Z) and by means of which control signals for commutating the winding phases (X, Y, Z) are produced, the signals being derived from commutation signals (I) which, in each case, are caused as a result of the induction in the winding phases (X, Y, Z) as they are switched-off during each switch over of the winding phases for the production of the motor torque as a result of the commutation process, characterised in that, for detecting the phase of the write/read heads (K1, K2) which are disposed on the periphery of the rotating head drum (1) and for the purposes of obtaining control and regulating values for regulating the drive mechanism for the head drum and/or the tape, there is provided a position indicating sensor which is formed by a winding phase (X, Y, Z) that provides at least one commutation signal (I) and one of the write/read heads (K1, K2), in that, during an initialising process for the circuit arrangement which is carried out on each occasion at the beginning of each recording or reproduction mode, a commutation signal (I) is determined by means of a microprocessor (µP) and a signal that is detected during the respective initialising process by one of the write/read heads (K1, K2), with which commutation signal (I) there is associated a zero phase relative to the reference signal (20) of the signal that is to be recorded or is being reproduced and that, the microprocessor (µP) is provided for the purposes of obtaining the control and regulating values for regulating the phase of the drive mechanism for the head drum and/or the tape from the commutation signal (I).

2. Recorder in accordance with Claim 1, characterised in that, the circuit arrangement comprises at least one phase regulating device which consists of at least one winding phase (X, Y, Z) that provides a commutation signal (I) and a regulating path that is connected to this winding phase.

3. Recorder in accordance with Claim 1, characterised in that, the signal detected by one of the write/read heads (K1, K2) during the initialising process for the recording mode is a signal (22) that is stored on the recording medium (2) and is obtained by an initialising signal (21) which is supplied to one of the write/read heads (K1, K2) for a predetermined duration or for a predetermined amount of angular rotation of the head drum when the recording medium(2) is static and whose signal track, which is thereby left behind, is thereafter read by the selfsame write/read head and evaluated by the microprocessor (µP) for determining the phase angle of the write/read heads (K1, K2), whereby the length of the respective signal track that has been left behind, in combination with its location in terms of phase relative to the reference signal (20), is, on each occasion, a measure for the phase angle of the write/read heads (K1, K2).

4. Recorder in accordance with Claim 3, characterised in that, the angular rotation of the head drum is provided for the duration of the supply of the initialising signal (21) in correspondence with the angle by which the tape is wrapped around the head drum (1) or in correspondence with the standard track length.

5. Recorder in accordance with Claim 3 or 4, characterised in that, a recording signal of the recorded signal, which is appropriately transposed in the frequency domain, is provided as the initialising signal (21).

6. Recorder in accordance with Claim 1, characterised in that, the determination of the commutation signal (I) during the initialisation of the reproduction mode is effected by detecting the complete length of the track of a signal track of the existing recording and that, for the purposes of detecting a signal track using one of the write/read heads (K1, K2), the drive speed of the recording medium (2) deviates from the normal speed of reproduction during the initialisation process.

## Revendications

1. Enregistreur avec un tambour à têtes rotatif (1) pour l'enregistrement et/ou la reproduction, selon la méthode du balayage hélicoïdal (helical scan), de signaux dans les pistes hélicoïdales d'un support d'enregistrement en forme de bande (2) entraîné par un moteur cabestan (4), avec un moteur (3) entraînant directement ledit tambour à têtes (1) dont les faisceaux d'enroulement (X, Y, Z) sont commutés électroniquement, et avec un dispositif pour le réglage de phase du mécanisme d'entraînement du tambour à têtes et/ou de la bande, comportant un circuit de commutation des moteurs (32) relié aux faisceaux d'enroulement (X, Y, Z) et permettant de générer des signaux de commande pour la commutation desdits faisceaux d'enroulement (X, Y, Z), lesdits signaux de commande étant déduits de signaux de commutation (I) qui, eux, sont produits par induction dans les faisceaux d'enroulement (X, Y, Z) déconnectés au moment des commutations des faisceaux d'enroulement nécessaires pour générer le couple de rotation des moteurs ; enregistreur **caractérisé en ce** qu'un capteur de position est prévu pour la détection de phase des têtes d'enregistrement/lecture (K1, K2) disposées sur la circonférence du tambour à têtes rotatif (1) afin d'obtenir les grandeurs de référence et de réglage pour le réglage de phase des mécanismes d'entraînement du tambour à têtes et/ou de la bande, ledit capteur de position étant constitué d'un faisceaux d'enroulement (X, Y, Z) fournissant au moins un signal de commutation (I) et de l'une des têtes d'enregistrement/lecture (K1, K2), sachant que, lors d'une initialisation de l'enregistreur effectuée à chaque lancement du mode d'enregistrement ou de reproduction, un microprocesseur (µP) et un signal détecté par l'une des têtes d'enregistrement de lecture (K1, K2) lors de ladite procédure d'initialisation servent à définir un signal de commutation (I) auquel est allouée une phase nulle par rapport au signal de référence (20) du signal à enregistrer ou à reproduire, et sachant en outre que ledit microprocesseur (µP) est prévu pour générer, à partir du signal de commutation (I), les grandeurs de référence et de réglage pour le réglage de phase des mécanismes d'entraînement du tambour à têtes et/ou de la bande.

2. Enregistreur selon la revendication 1 **caractérisé en ce** que ledit dispositif comporte au moins un élément de réglage de phase composé d'un faisceau d'enroulement (X, Y, Z) fournissant au moins un signal de commutation (I) et d'un circuit de réglage relié audit faisceau d'enroulement.

3. Enregistreur selon la revendication 1 **caractérisé en ce** que le signal détecté par l'une des têtes d'enregistrement/lecture (K1, K2) lors de l'initialisation pour le mode d'enregistrement, est un signal (22) enregistré sur ledit support d'enregistrement (2) qui est obtenu à partir d'un signal d'initialisation (21) appliqué à l'une des têtes d'enregistrement/lecture (K1, K2) pour une durée définie ou un angle de rotation défini du tambour à têtes, alors que le support d'enregistrement (2) demeure immobile, et dont la piste signal est ensuite lue par la même tête d'enregistrement/lecture (K1, K2) pour être analysée par le microprocesseur (µP) afin de déterminer la position de phase desdites têtes d'enregistrement/lecture (K1, K2), sachant que la longueur de la piste signal en association avec la position de phase de celle-ci par rapport au signal de référence (20) constituent une mesure pour la position de phase des têtes d'enregistrement/lecture.

4. Enregistreur selon la revendication 3 **caractérisé en ce** que la valeur de l'angle de rotation du tambour à têtes pour la durée de l'application du signal d'initialisation (21), est prévue en fonction de l'angle d'enroulement de la bande du tambour à têtes (1) ou en fonction de la longueur de piste selon le standard.

5. Enregistreur selon l'une quelconque des revendications 3 ou 4 **caractérisé en ce** qu'un signal d'enregistrement converti en fréquence et provenant du signal vidéo, sert de signal d'initialisation 21.

6. Enregistreur selon la revendication 1 **caractérisé en ce** que, lors de l'initialisation du mode lecture, le signal de commutation (I) est déterminé par détection de la longueur complète de la piste signal de l'enregistrement existant et que, pendant l'initialisation, la vitesse d'entraînement du support d'enregistrement (2) diffère de la vitesse de lecture normale afin que l'une des têtes d'enregistrement/lecture (K1, K2) puisse détecter une piste signal.
